# EUROPÄISCHE PATENTSCHRIFT

(11) **EP 3 792 612 B1**
(45) Veröffentlichungstag und Bekanntmachung des Hinweises auf die Patenterteilung: **23.11.2022**
(21) Anmeldenummer: 18918312.2
(22) Anmeldetag: 07.05.2018
(51) Int. Cl.: G01N 1/28, B05C 3/02, G01N 1/36, G01N 1/31, G01N 1/06, B05C 3/109, B05C 13/02

(54) **VORRICHTUNG ZUR VERARBEITUNG UND INFILTRIERUNG HISTOLOGISCHER UND BIOLOGISCHER PROBEN**
DEVICE FOR PROCESSING AND INFILTRATING HISTOLOGICAL AND BIOLOGICAL SAMPLES
DISPOSITIF DE TRAITEMENT ET D'IMPRÉGNATION D'ÉCHANTILLONS HISTOLOGIQUES ET BIOLOGIQUES

(43) Veröffentlichungstag der Anmeldung: 17.03.2021
(73) Patentinhaber: Tjan, Eleonora Iljinichna, St.Petersburg, 194223 (RU)
(72) Erfinder: Tjan, Eleonora Iljinichna, St.Petersburg, 194223 (RU)
(74) Vertreter: Weber & Seidel
(86) Internationale Anmeldenummer: PCT/RU2018/000294
(87) Internationale Veröffentlichungsnummer: WO 2019/216783

(56) Entgegenhaltungen:
- EP-A1- 0 969 277
- RU-A- 2001 113 669
- RU-C1- 2 150 097
- SU-A1- 1 719 257
- US-A- 4 363 783
- US-A- 6 058 788
- US-A- 6 058 788
- US-A1- 2004 029 284
- US-A1- 2010 216 222
- US-A1- 2013 087 945
- US-A1- 2014 245 842
- US-B2- 9 377 382

## Beschreibung

### Gebiet der Technik

Die Erfindung gehört zu Untersuchungsmethoden und insbesondere zu Vorrichtungen zur Vorbereitung histologischer und biologischer Proben für die mikroskopische Untersuchung.

Bevor zur Untersuchung entnommene Gewebeproben geschnitten werden können, müssen diese mit einer wässerigen oder wässrig-alkoholischen Formaldehydlösung fixiert und dann anschließend mit Hilfe einer organischen Flüssigkeit, die gut mit einer dehydrierenden Flüssigkeit und Paraffin (oder anderem Wachs) vermischt werden kann, geklärt und zum Schluss mit geschmolzenem Paraffin oder anderem Wachs imprägniert werden.

Zum Schneiden muss die mit Paraffin imprägnierte Probe in einem Mikrotomhalter fixiert werden. Um die Probe in einem Standard-Mikrovolumenhalter befestigen zu können, muss die Probe in einen Paraffinblock eingebettet werden. Das Paraffin wird zusammen mit der Probe geschnitten, und die entstandenen Schnitte werden dann im Wasser ausgebreitet und auf das Objektträgerglas gelegt. Die Bildung des Wachsblocks ist ein separates Verfahren. Die histologische Probe, die dehydriert und mit Wachs imprägniert wurde, wird in eine Gießform geeigneter Größe gelegt, so ausgerichtet, dass der zu untersuchende Teil der Probe auf den Boden der Gießform gedrückt wird, die Gießform wird mit Paraffin gefüllt und mit einer beschrifteten Kassette abgedeckt, in der sich die Probe während der Dehydrierung und des Wachsens befand, wobei der Kassettendeckel entfernt wird. Die Kassette wird zum Blockhalter für die Fixierung im Mikrotom.

Der Vorgang des Formens von Blöcken wird als Einblocken bezeichnet, und für seine Durchführung werden spezielle Gießvorrichtungen verwendet, aufweisend einen Behälter mit einer Paraffinschmelze, beheizte Behälter für Formen und Probenkassetten und eine gekühlte Oberfläche zur Vervollständigung der Blockbildung.

Die Nachteile des Standard-Gießverfahrens sind die arbeitsintensive, unergonomische und chemisch gefährliche Arbeitsweise für das Personals (Rest der Klärflüssigkeit - Xylol) sowie die Möglichkeit von Fehlern in der Kassettennummerierung beim Probentransfer.

### Stand der Technik

Versuche, den Gießprozess zu automatisieren, sind wiederholt unternommen worden. Um diesen Prozess zu automatisieren, müssen zwei Bedingungen erfüllt sein: Zum einen muss die Probe so auf dem Boden der Gießform angeordnet sein, dass sie oben auf dem Block zu liegen kommt, zum anderen muss die Probe in einer bestimmten Weise ausgerichtet werden, um Schnitte zu erhalten.

Die histologischen Probenhandhabungs- und Gießgeräte Pathos Delta und Logos von Milestone SRL [Unternehmenskatalog Milestone+Klinipath «Rapid Tissue Processing and Auto-embedding ALL-IN-ONE Synergy»] umfassen ein ringförmiges Gestell mit den in der Prozessorkammer angeordneten Probenkassetten. Während des Prozesses zur Probenbehandlung werden die Kassetten im Gestell schräg ausgerichtet; im Übergang zum Gießvorgang werden die Kassetten horizontal ausgerichtet.

Nach dem Gießen werden die Kassetten aus dem Prozessor entnommen und zur Kühlung auf die Kühlplatte gelegt (siehe Prospekt). Für den Betrieb dieser Geräte werden speziell von Klinipath B.V. vorgefertigte Kassetten-Gießform-Einheiten [EP 2439510, IPC G01N1/36, 2016] verwendet, mit einer Aussparung, auf deren Boden eine histologische Probe gelegt wird, die mit einem Schwamm bedeckt wird, der für die Verarbeitungsflüssigkeiten und die Paraffinschmelze durchlässig ist; die Gießform hat nachgebende Kanten und eine zentrale Öffnung; die Öffnung wird durch eine Standardkassette für histologische Proben abgedeckt, welche zwischen den Kanten der Gießform eingespannt ist. Wie in der Broschüre dargestellt, kann der Block mit Probe und Kassette nach dem Abkühlen leicht von der Gießform getrennt und dem Schneiden zugeführt werden.

Während der Gewebebehandlung kann die Flüssigkeit im Inneren des Ringgestells mit einem Magnetrührer gerührt werden; dies ist jedoch für einen effektiven Austausch der Flüssigkeit in der Probe, die fest an den Boden der Form gepresst ist, nicht ausreichend, so dass zur Beschleunigung des Prozesses Mikrowellenbestrahlung empfohlen wird. Beträgt die Einbau- und Füllzeit für 1 mm dicke Proben 1 Stunde 35 min, so benötigen 5 mm dicke Proben 5 Stunden 35 min (siehe Prospekt, Seite 5). Daher sollte das Laden des Geräts durch Kassetten mit Proben gleicher Dicke erfolgen, da beim Laden von Proben mit unterschiedlichen Dicken, einige von ihnen während der Gewebevorbehandlung überexponiert werden können und andere die Gewebevorbehandlung möglicherweise nicht vollständig durchlaufen, wodurch der Einsatz des betreffenden Gewebeprozessors eingeschränkt wird. Außerdem erlauben sowohl Vorrichtung als auch Arbeitsweise nicht die gleichzeitige Beladung mit unterschiedlichen Kassetten - sowohl von gewöhnlichen als auch Kassette-Gießform-Einheiten; dies schränkt die Ladekapazität stark ein - 40 Kassette-Gießform-Einheiten, während die Ladekapazität mit Standard-Kassetten 300 Stück ist.

Prozessoren, in denen sowohl die Vorbehandlung als auch das Einblocken von histologischen und biologischen Proben in Kassette-Gießform-Einheiten durchgeführt werden kann, sind wiederholt angeboten worden (siehe z.B., US8900857, IPC C12M3/00, 2014; US9733166, IPC G01N1/36, 2017; US9194776, IPC A61B10/00, 2015; US9568402, IPC A61B10/00, 2017), jedoch haben sie nicht die Mittel, um die Gewebeverarbeitung zu beschleunigen, was keine zeitnahe Fertigstellung der Verarbeitung von Proben erlaubt, die fest auf den Boden der Form gepresst sind.

Die Vorrichtung zur Bearbeitung und Imprägnierung von histologischen und biologischen Proben (RU2150097, IPC G01N1/28, 2000) ermöglicht die Steigerung der Produktivität der Bearbeitung bei Erhaltung ihrer hohen Effizienz. Die Vorrichtung umfaßt eine im Gehäuse eingeschlossene Drehvorrichtung, deren Drehachse horizontal angeordnet ist, mit Probenkassettenbehältern, die in Form eines vertikal angeordneten Ringes auf der Achse montiert sind, Mittel zur Drehung der Drehachse mit variabler Geschwindigkeit und Gefäße mit Verarbeitungs- und Imprägnierflüssigkeiten, die außerhalb des Gehäuses angeordnet und mit diesem durch Rohrleitungen für die Zufuhr und das Ablassen dieser Flüssigkeiten verbunden sind. Probenkassetten werden in die Behälter gelegt. Der Spiegel der Verarbeitungs- und Imprägnierungsflüssigkeiten wird ungefähr auf die Höhe der Drehachse eingestellt. Beim Drehen der Achse, werden die Behälter abwechselnd in die Verarbeitungsflüssigkeit hinein- und aus dieser herausbewegt; wobei die Verarbeitungsflüssigkeit aus den Behältern und Probenkassetten herausfließt und sie wieder füllt. Die genannte Vorrichtung ermöglicht es, histologische Proben in Kassette-Gießform-Einheiten mit hoher Effizienz und Produktivität zu bearbeiten und zu imprägnieren. Sie ist jedoch nicht zum Gießen geeignet, da die Probenkassetten in den Behältern nicht in horizontaler Ausrichtung gehalten werden, was notwendig ist, um die Paraffinschmelze während des Gießens in Kassette-Gießform-Einheiten zu halten.

Weitere Vorrichtungen zur Bearbeitung und Imprägnierung histologischer und biologischer Proben sind in US 2013/087945 A1, US 2010/216222 A1, US 2004/029284 A1, US 4 363 783 A, US 6 058 788 A und US 2014/245842 A1 offenbart.

### Offenbarung der Erfindung

Die Erfindung beruht auf der Aufgabe, eine Vorrichtung zu schaffen, in der eine wirksame Bearbeitung und Imprägnierung von histologischen und biologischen Proben und das anschließende Einblocken für die Mikrotomie durchgeführt werden kann.

Die angegebene Aufgabe wird dadurch gelöst, dass eine Vorrichtung zur Bearbeitung und Imprägnierung von histologischen und biologischen Proben, aufweisend eine in einem Gehäuse eingeschlossene Drehvorrichtung, deren Drehachse horizontal angeordnet ist, mit in Form eines vertikal angeordneten Rings daran montierten Behältern für Probenkassetten, Mittel zur Drehung der Drehachse mit variabler Geschwindigkeit und Behälter mit Bearbeitungs- und Imprägnierungsflüssigkeiten, die außerhalb des Gehäuses angeordnet und mit diesem durch Rohrleitungen für Zufuhr und Ableitung dieser Flüssigkeiten verbunden sind, zusätzlich einen Mechanismus zur Ausrichtung von Probenkassettenbehältern aufweist, der zwischen dem Behälterring und der Gehäusewand angeordnet ist, und der über separate Mittel verfügt, um Probenkassettenbehälter in horizontale oder geneigte Position zu bringen und sie horizontal oder geneigt zu halten.

Der Mechanismus für die Ausrichtung und das Festhalten von Behältern in horizontaler oder geneigter Position kann in Form von Mechanismen erfolgen, die vom Stand der Technik her bekannt sind, jedoch noch nie zuvor in Geräten für die Vorbehandlung, Imprägnierung oder das Ausgießen von biologischen und histologischen Proben verwendet wurden, wie z.B. ein Zahnradgetriebe oder in Form eines Planetengetriebes oder als Parallelogrammmechanismus.

Die Kassettenbehälter in der erfindungsgemäßen Vorrichtung haben einen quadratischen Querschnitt. In der erfindungsgemäßen Vorrichtung können Proben, die in Standardkassetten und in Kassette-Form-Einheiten vorliegen, gleichzeitig verarbeitet werden, da die Behälter für Standardkassetten und Kassette-Formeinheiten austauschbar sind.

Der erfindungsgemäße Prozessor ist in den Fig.. 1 - 4 dargestellt.
Fig. 1A und 1B zeigen schematisch die Anordnung eines Rings von Behältern mit eingelegten Kassetten, die an einer Drehachse befestigt sind.
Fig. 2A und 2B stellen ein Zahnradgetriebe dar, das zwischen dem Behälterring und der Wand des Prozessors angeordnet ist.
Fig. 3A - 3C zeigt ein Planetengetriebe, das sich zwischen dem Behälterring und der Wand des Prozessors befindet.
Fig. 4A - 4C stellt einen Parallelogramm-Mechanismus zum Bewegen von Behältern in eine horizontale oder geneigte Position dar.

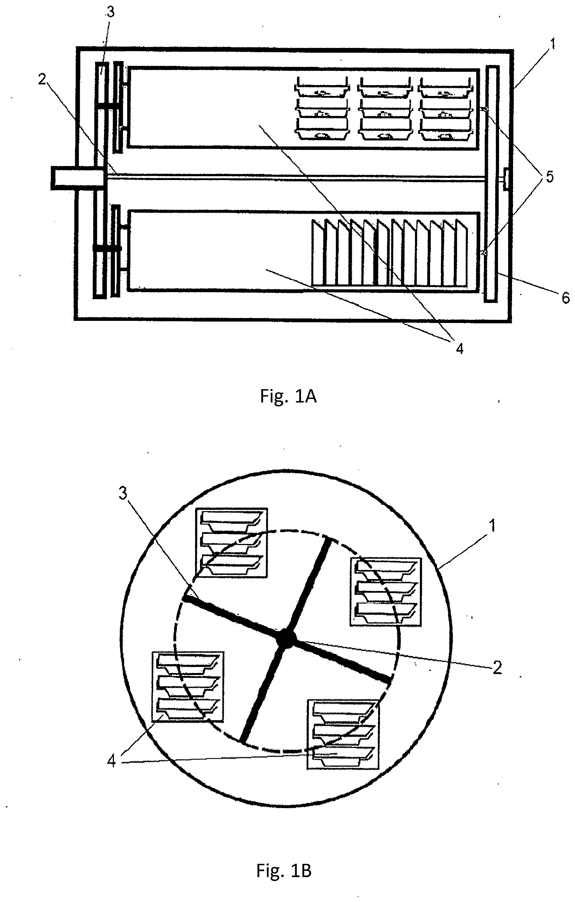

Der in Fig. 1A und 1B schematisch dargestellte Prozessor hat ein Gehäuse 1, in dem die Drehachse 2 horizontal verläuft. Mit der Achse 2 ist ein Drehträger 3 verbunden, an dem Behälter 4 mit Kassetten oder Kassette-Gießform-Einheiten mit histologischen Proben befestigt sind. Die Behälter werden mit den Achsen 5 auf der Stützscheibe 6 befestigt (Fig. 1B). Die Achse 2 wird durch Antrieb 7 gedreht.

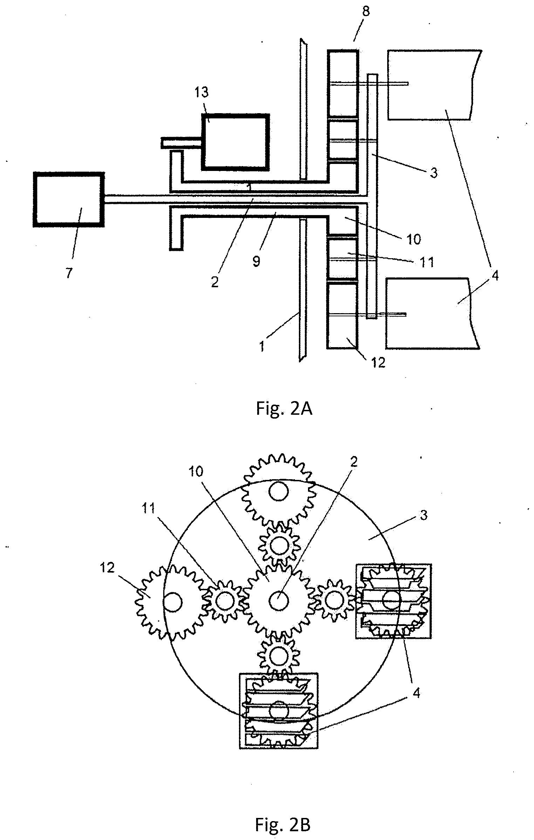

Im Falle der Verwendung eines Zahnradgetriebes (Fig. 2A - 2B) wird der Mechanismus 8 zur Orientierung der Behälter, der sie horizontal oder geneigt hält, zwischen der Wand des Gehäuses 1 und dem Drehträger 3 (Fig. 2A) angeordnet. Mechanismus 8 umfasst ein zentrales Ritzel 10 (Fig. 2B), das auf der Hohlachse 9 montiert ist, die Teil des Prozessors ist. Innerhalb der Hohlachse 9 befindet sich die Drehachse 2, mit der der Drehträger 3 verbunden ist. Auf dem Drehträger 3 sind die Zwischenritzel 11 und Außenritzel 12 montiert, wobei die Zwischenritzel 11 gleichzeitig mit dem zentralen Ritzel 10 und den Außenritzeln 12 im Eingriff stehen. Die Behälter 4 sind an den Außenritzeln 12 befestigt. Ein separater Antrieb 13 wird verwendet, um die Behälter in eine horizontale oder geneigte Position zu bewegen.

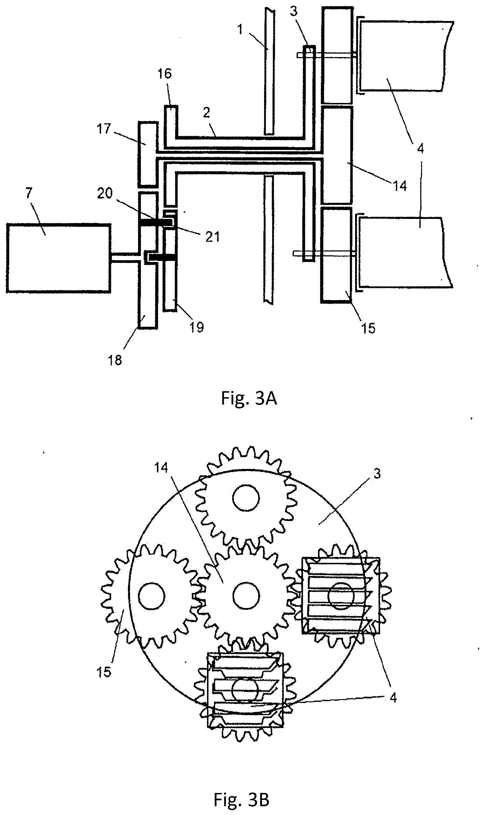

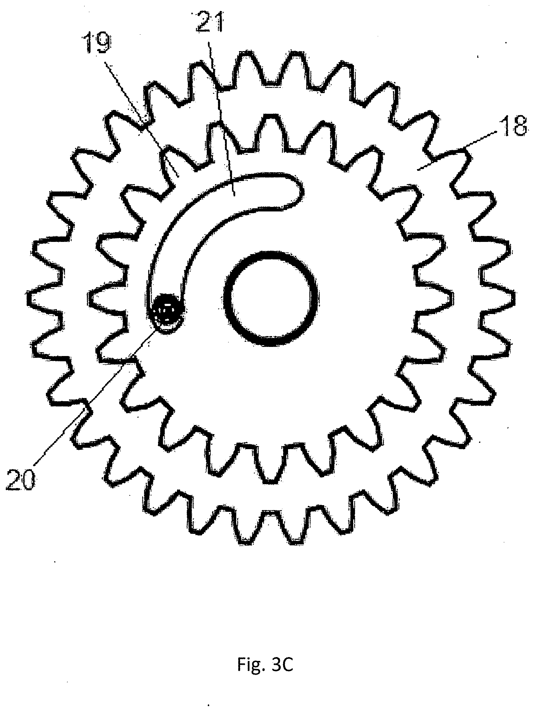

Das Planetengetriebe befindet sich zwischen Behälter 4 und Drehträger 3 und umfasst ein zentrales Ritzel 14 und ein äußeres Ritzel 15, die am Behälter 4 befestigt sind (Fig. 3A und 3B). Der Drehträger 3 ist durch die hohle Achse 2 mit dem Ritzel 16 verbunden. Im Inneren der hohlen Achse 2 befindet sich eine Achse, die das zentrale Ritzel 14 des Planetengetriebes mit dem äußeren Ritzel 17 verbindet, das im Eingriff mit dem Ritzel 18 ist, das auf der Antriebsachse 7 angeordnet ist. Ritzel 19, das mit Ritzel 16 in Eingriff steht, ist koaxial mit Ritzel 18 ausgebildet. Zur Beschränkung des Drehwinkels ist auf dem Ritzel 18 ein außermittiger Mitnehmerstift 20 und auf dem Ritzel 19 eine bogenförmige Nut 21 (siehe Fig. 3C) angeordnet, in die der Mitnehmerstift 20 eingreift.

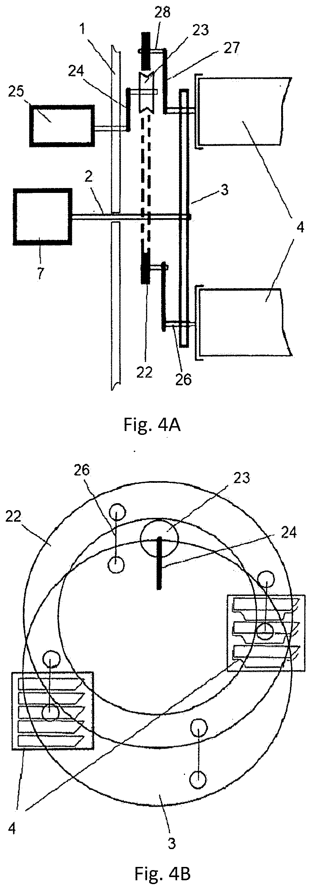

Der Parallelogrammmechanismus befindet sich zwischen Drehträger 3 und der Gehäusewand 1 (Fig. 4A-4C). Der Mechanismus umfasst einen Ring 22, der sich oberhalb des Drehträgers 3 befindet und von einer Stützrolle 23 getragen wird, die auf einem Schwenkarm 24 mit einer Achse montiert ist, und einen zusätzlichen Antrieb 25, der sich außerhalb des Prozessors befindet. Die Achsen der Behälterhalterungen 26 sind durch Hebel 27 mit den entsprechenden Achsen 28 verbunden, die sich auf Ring 22 befinden.

Die Mechanismen zum Bewegen der Behältern für die Probenkassetten in eine horizontale oder geneigte Position sind wie folgt.

Übertragung (Schalten) des Zahnradgetriebes: Beim Anhalten des Drehträgers 3 wird das mittlere Ritzel 10 durch einen separaten Antrieb 13 um einen bestimmten Winkel gedreht, während das äußere Ritzel 12 und die zugehörigen Behälter 4 ebenfalls um den gleichen Winkel gedreht werden. Dann wird der Antrieb 13 angehalten, Antrieb 7 wird eingeschaltet, und die Außenritzel 12 und die zugehörigen Behälter 4 drehen zusammen mit dem Drehträger 3 in einer neuen, relativ zur Horizontalen unveränderten Position.

Übertragung (Schalten) des Planetengetriebes: Durch den Antrieb 7 wird das Ritzel 18 gegen den Uhrzeigersinn gedreht; dabei bewegt sich der Mitnehmerstift 20 in der bogenförmigen Nut 21. Das zweite Ritzel 19 steht, bis der Mitnehmerstift 20 das Ende der Nut 21 erreicht - während dessen Ritzel 14 dreht sich und dreht dabei das äußere Ritzel 15 mit den Behälterhalterungen 4, wobei sich die Behälterposition relativ zur Horizontalen ändert. Nachdem der Mitnehmerstift 20 das Ende der Nut 21 erreicht hat, beginnen Ritzel 18 und 19, der Drehträger 3 und das mittlere Ritzel 14 gemeinsam zu drehen, und die Position der äußeren Ritzel 15 mit den Behälterhalterungen 4 bleibt bis zur nächsten Planetengetriebeschaltung unverändert.

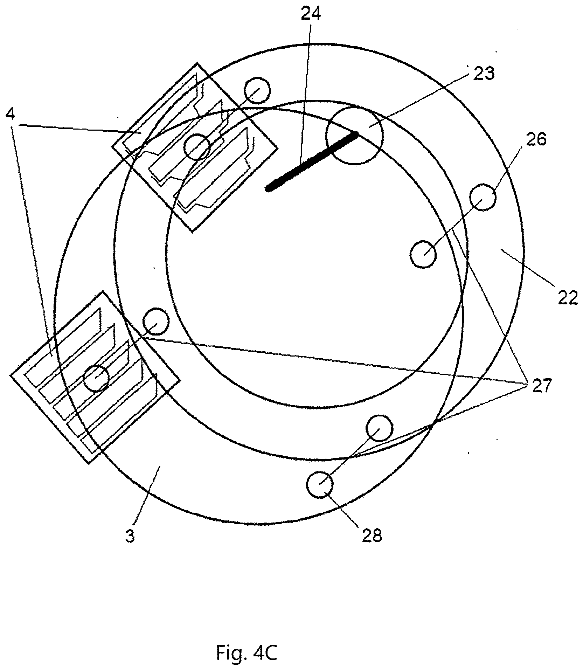

Übertragung (Schaltung) des Parallelogrammsmechanismus: Bei vertikaler Hebelposition 24 (Fig. 4B) der Stützrolle 23 stehen die Verbindungshebel 27 der Achsen 28 der Behälter ebenfalls senkrecht, und die Behälter 4 befinden sich in horizontaler Position. Um die Position der Behälter zu verändern, wird der Hebel 24 der Stützrolle gedreht, der Ring 22 wird in die gleiche Richtung verschoben, die Verbindungshebel 27 drehen synchron die Achsen 26 der Halterungen der Behälter 4, die eine Schräglage einnehmen (Fig. 4C), die während der Drehung des Drehträgers 3 erhalten bleibt.

Die erfindungsgemäße Vorrichtung funktioniert wie folgt:
Zu Beginn des Zyklus, beim Beladen von Behältern mit Kassetten und Kassette-Gießform-Einheiten, werden die Behälter zur besseren Handhabbarkeit bei der Beladung horizontal angeordnet. Die mit Kassetten und Kassette-Gießform-Einheiten beladenen Behälter werden mit Hilfe des verwendeten Ausrichtungsmechanismus in eine geneigte (5 - 90° zur Horizontalen) Position gebracht.

Im Gehäuse 1 wird ein kleines Vakuum erzeugt, unter dessen Einfluss die erste Flüssigkeit aus einem außerhalb des Gehäuses befindlichen Gefäß in das Gehäuse gesaugt wird (nicht abgebildet). Der Spiegel der Prozessflüssigkeiten wird unterhalb oder auf Höhe der Achse 2 eingestellt. Der Antrieb 7 beginnt den Behälter 4 mit einer Geschwindigkeit von 1 - 10 U/min zu drehen. Während sich die Achse dreht, tauchen die Behälter abwechselnd in die Verarbeitungsflüssigkeit ein und wieder heraus; wobei die Verarbeitungsflüssigkeit aus den Behältern und Kassetten oder Kassette-Gießform-Einheiten nach unten tropft und sie wieder auffüllt. Am Ende jedes Verarbeitungsschritts wird die Flüssigkeit aus dem Gehäuse in ein entsprechendes Gefäß entfernt und die Antriebsgeschwindigkeit erhöht, um Tropffeuchtigkeit aus Behältern und Probenkassetten (und vorgefertigten Formen) zu entfernen. Die Verarbeitung kann unter einem Vakuum von 200 - 600 mm Hg durchgeführt werden.

Nachdem die Proben verarbeitet und imprägniert wurden, werden die Behälter mit Hilfe des verwendeten Orientierungsmechanismus in horizontale Position gebracht, die das Ausgießen mit Paraffin zur Herstellung der für das Schneiden benötigten Blöcke ermöglicht. Am Ende des Gießens wird das Paraffin aus der Kammer abgelassen und die Kammerheizung abgeschaltet, so dass das Paraffin in den Kassette-Gießform-Einheiten fest wird.

Die erfindungsgemäße Vorrichtung ermöglicht nicht nur die Bearbeitung und Imprägnierung histologischer Proben mit hoher Effizienz und Produktivität, wobei sowohl Standardkassetten als auch Kassette-Form-Einheiten in einer Beladung verwendet werden können, sondern auch das Gießen von Blöcken in vorgefertigten Kassette-Gießform-Einheiten in derselben Vorrichtung, was ein zeit- und arbeitsaufwendiges Verfahren des manuellen Gießens sowie mögliche Fehler bei der Identifizierung der Proben ausschließt.

### Gewerbliche Anwendbarkeit

Die erfindungsgemäße Vorrichtung zur Verarbeitung und Imprägnierung von histologischen und biologischen Proben kann in Labors verwendet werden, die auf histologische (pathologische) und zytologische Untersuchungen spezialisiert sind, sowie in allen anderen biologischen und medizinischen Einrichtungen, die sich mit der mikroskopischen Untersuchung von Geweben und Zellen befassen.

## Patentansprüche

1. Vorrichtung zur Bearbeitung und Imprägnierung histologischer und biologischer Proben, aufweisend eine in einem Gehäuse (1) eingeschlossene Drehvorrichtung, deren Drehachse (2) horizontal angeordnet ist, mit in Form eines vertikal angeordneten Rings daran montierten Behältern (4) für Probenkassetten, Mittel (7) zur Drehung der Drehachse mit variabler Geschwindigkeit und Gefäße mit Verarbeitungs- und Imprägnierungsflüssigkeiten, die außerhalb des Gehäuses angeordnet und mit diesem durch Rohrleitungen für Zufuhr und Ableitung dieser Flüssigkeiten verbunden sind,
**dadurch gekennzeichnet,**
**dass** sie zusätzlich einen Mechanismus (8) zur Ausrichtung von Behältern für Probenkassetten aufweist, der zwischen dem Behälterring und der Gehäusewand angeordnet ist, und der über separate Mittel (10,11,12,13,14,15,16,17,18,19,20,21,22,23,24,25,26,27,28) verfügt, um Probenkassettenbehälter in eine horizontale oder geneigte Position zu bringen und diese in einer horizontalen oder geneigten Position zu halten.

2. Vorrichtung nach Anspruch 1,
**dadurch gekennzeichnet,**
**dass** der Mechanismus zur Behälterausrichtung in Form eines Zahnradgetriebes mit Zwischenritzeln (11) ausgebildet ist, wobei die Zwischenritzel (11) mit einem zentralen (10) und Außenritzeln (12) in Eingriff stehen.

3. Die Vorrichtung nach Anspruch 1,
**dadurch gekennzeichnet,**
**dass** der Mechanismus zur Behälterausrichtung in Form eines Planetengetriebes ausgeführt ist.

4. Vorrichtung nach Anspruch 1,
**dadurch gekennzeichnet,**
**dass** der Mechanismus zur Behälterausrichtung in Form eines Parallelogrammmechanismus ausgeführt ist.

5. Vorrichtung nach Anspruch 1,
**dadurch gekennzeichnet,**
**dass** die Kassettenbehälter quadratischen Querschnitt haben.

## Claims

1. A device for processing and impregnation of histological and biological samples, comprising a rotating device enclosed in a housing (1), the axis of rotation (2) of which is arranged horizontally, with containers (4) for sample cassettes mounted thereon in the form of a vertically arranged ring, means (7) for rotating the axis of rotation (2) with variable speed and vessels with processing and impregnating liquids located outside the housing and connected to it by pipes for supplying and discharging said liquids, **characterized in**
**that** it additionally comprises a mechanism (8) for orientation of containers for sample cassettes, which is located between the container ring and the housing wall and which has separate means (10, 11, 12, 13, 14, 15, 16, 17, 18, 19,. 20, 21, 22, 23, 24, 25, 26, 27, 28) for transferring sample cassette containers into a horizontal or inclined position and holding them in a horizontal or inclined position.

2. The device according to claim 1, **characterized in that** the mechanism for container orientation is made in the form of a gear transmission with intermediate gears (11), wherein the intermediate gears (11) are engaged with a central (10) and external gears (12).

3. The device according to claim 1, **characterized in that** the mechanism for container orientation is made in the form of a planetary gear.

4. The device according to claim 1, **characterized in that** the mechanism for container orientation is made in the form of a parallelogram mechanism.

5. The device according to claim 1, **characterized in that** the cassette containers have a square cross section.

## Revendications

1. Dispositif, destiné à traiter et à imprégner des échantillons histologiques et biologiques, comportant un dispositif de rotation enfermé dans un boîtier (1), dont l'axe de rotation (2) est placé à l'horizontale, doté de contenants (4) pour des cassettes d'échantillons, montés sur celui-ci sous la forme d'un anneau placé à la verticale, de moyens (7) destinés à faire tourner l'axe de rotation (2) à vitesse variable et de récipients avec des liquides de mise en œuvre et d'imprégnation, qui sont placés hors du boîtier et qui sont raccordés avec celui-ci par des canalisations pour l'alimentation et l'évacuation desdits liquides,
**caractérisé**
**en ce qu'**il comporte additionnellement un mécanisme (8) pour l'orientation de contenants pour cassettes d'échantillons, qui est placé entre la bague de contenants et la paroi du boîtier et qui dispose de moyens (10, 11, 12, 13, 14, 15, 16, 17, 18, 19, 20, 21, 22, 23, 24, 25, 26, 27, 28), pour amener des contenants de cassettes d'échantillons dans une position horizontale ou inclinée et pour les maintenir dans une position horizontale ou inclinée.

2. Dispositif selon la revendication 1,
**caractérisé**
**en ce que** le mécanisme d'orientation des contenants est conçu sous la forme d'une transmission à engrenages, pourvue de pignons intermédiaires (11), les pignons intermédiaires (11) étant en engrènement avec un pignon central (10) et avec des pignons extérieurs (12).

3. Le dispositif selon la revendication 1,
**caractérisé**
**en ce que** le mécanisme d'orientation des contenants est réalisé sous la forme d'un engrenage planétaire.

4. Dispositif selon la revendication 1,
**caractérisé**
**en ce que** le mécanisme d'orientation des contenants est réalisé sous la forme d'un mécanisme à parallélogramme.

5. Dispositif selon la revendication 1,
**caractérisé**
**en ce que** les contenants de cassettes disposent d'une section transversale quadratique.
